(19)

**Europäisches Patentamt**
**European Patent Office**
**Office européen des brevets**

(11) **EP 4 769 238 A1**

(12) **EUROPEAN PATENT APPLICATION**

(43) Date of publication:
**01.07.2026 Bulletin 2026/27**

(21) Application number: **24307323.6**

(22) Date of filing: **27.12.2024**

(51) International Patent Classification (IPC):
**G06N 10/20** (2022.01)    **G06N 10/40** (2022.01)
**G06N 10/70** (2022.01)

(52) Cooperative Patent Classification (CPC):
**G06N 10/20; G06N 10/40; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventor: **GOUZIEN, Elie**
**75015 Paris (FR)**

(74) Representative: **Atout PI Laplace**
**Immeuble Up On**
**25 Boulevard Romain Rolland**
**CS 40072**
**75685 Paris Cedex 14 (FR)**

(54) **A METHOD AND SYSTEM FOR PERFORMING A CONTROLLED-Z GATE BETWEEN QUBITS**

(57)    Method of performing a CNOT gate between a control qubit having a control qubit resonance frequency and a target qubit having a target qubit resonance frequency, in which said control qubit and said target qubit are cat qubits hosted respectively in a control resonator and in a target resonator of a superconducting quantum circuit, and are stabilized therein by means of a command circuit arranged for selectively applying radiation to said superconducting quantum circuit, and in which said control resonator and said target resonator are connected via an ancilla resonator coupled to said command circuit for stabilizing a respective ancilla qubit having an ancilla qubit resonance frequency, and wherein said control qubit and said target qubit are not directly connected. Said method comprises the following operations: a) preparing (400, 700) the ancilla qubit in a state $e^{i\phi 1Z}|+\rangle$ where $\phi$ 1 is a phase comprised in the range $[0; \pi]$ measured around the Z axis of the ancilla qubit, b) performing a CNOT gate (410, 710) between said control qubit and said ancilla qubit, with the control qubit being the target and the ancilla qubit being the control, c1) performing a S gate (432, 732) on said target qubit, c2) performing a CNOT gate (435, 735) between said target qubit and said ancilla qubit, with the target qubit being the target and the ancilla qubit being the control, c3) performing a conjugate transpose S gate (436, 736) on said target qubit, c4) performing a S gate (438, 738) on said ancilla qubit, c5) performing a CNOT gate (439, 739) between said target qubit and said ancilla qubit, with the target qubit being the target and the ancilla qubit being the control, d) preparing (440, 740) the control qubit in a state $|0\rangle$ or $|1\rangle$, e) performing a CNOT gate or a zero-controlled NOT gate (450, 750) between said control qubit and said ancilla qubit, with the control qubit being the target and the ancilla qubit being the control, f) performing an MZ operation (420, 720) on said control qubit, g) deriving a quantum correction to be performed depending on the result of operation f), h) performing a measurement in the basis $\{e^{i\phi 1Z}|+\rangle, e^{i\phi 1Z}|-\rangle\}$ (460, 760) on said ancilla qubit, i) deriving a corrective quantum Z gate to be performed depending on the result of operation h), wherein operation f) is performed after operation b) but before operation d), and wherein operation h) is performed after operations e) and c5). There is also provided a quantum system, a computer program product, and a computer-readable medium.

| Prepare ancilla | 400 |
| CNOT between ancilla and data 1 | 410 |
| Measure data 1 and correct ancilla | 420 |
| Phase gate on data 2 | 432 |
| CNOT between ancilla and data 2 | 435 |
| Dagger Phase gate on data 2 | 436 |
| Phase gate on ancilla | 438 |
| CNOT between ancilla and data 2 | 439 |
| Prepare data 1 | 440 |
| CNOT between ancilla and data 1 | 450 |
| Measure ancilla and correct data 1 | 460 |

Fig. 4

## Description

A. Background

The Applicant has been working for several years on the realization of quantum computers, and particularly quantum computers relying on cat qubits.

To provide a quantum computer, one must have a set of basis elements, such a data qubits which are linked into logical qubits by means of an error correcting code to provide fault tolerance, and the ability to perform quantum gates on the data qubits for the error correcting code, and on the logical qubits for the logical qubits.

The discovery of highly performant cat qubits by the Applicant has led to a radical progress toward providing a quantum computer. Indeed, the Applicant discovered a way to manufacture resonators for hosting a cat qubit in which the bit flip error time is orders of magnitude bigger than the phase flip error time, effectively reducing the error correction paradigm from two dimensions (phase flip and bit flip) to one dimension (phase flip only).

The Applicant has explored several architectures for providing a quantum circuit chip, involving various error correction schemes, whether linear (error correction code) or not (surface code, LDPC code, etc.).

In all cases, a big challenge to scaling to a quantum circuit having a useful amount of logical qubits relates to the fact that providing logical qubits and performing quantum gates necessitates connecting data cat qubits and ancilla cat qubits together, and that it is extremely difficult to provide a great number of resonators used for hosting interconnected cat qubits without having the various radiations or modes interacting between them.

In other words, it is one thing to provide a quantum circuit providing error correction for a single logical qubit, and an entirely different thing to provide the same for 10, 100 or several thousands of logical qubits.

Part of this scaling challenge lies in the ability to perform quantum gates, and particularly quantum gates between qubits hosting quantum data. For almost all quantum algorithms, mastering of the controlled-Z or controlled phase (CZ) gates is essential.

Conventionally, performing a CZ gate between a control qubit and a target qubit requires a physical link between these two qubits.

However, in the scaling context described above, these connections come in addition to the connections between the two or more data qubits which are used to encode a logical qubit and the one or more ancilla qubit which is used to detect the error syndrome of this logical qubit. This leads to circuits in which there is a very high degree of connectivity between all of the qubits, which is not desirable as explained above, not only in terms of manufacturability but also in terms of frequency crowding and noise management.

Moreover, for cat qubits, other known implementations of cat-cat CZ gates may require additional resources, for instance in the form of a dispersive coupled ancilla transmon and complex pulse sequences to realize particular two-qubit entangling gates called the cat-controlled transmon X rotation, as described in Hann, Connor T., et al. "Hybrid cat-transmon architecture for scalable, hardware-efficient quantum error correction." arXiv preprint arXiv:2410.23363 (2024).

The invention aims at improving the situation.

B. Summary

To this end, the Applicant proposes a of performing a controlled-Z (CZ) gate between a control qubit having a control qubit resonance frequency and a target qubit having a target qubit resonance frequency, in which said control qubit and said target qubit are cat qubits hosted respectively in a control resonator and in a target resonator of a superconducting quantum circuit, and are stabilized therein by means of a command circuit arranged for selectively applying radiation to said superconducting quantum circuit, and in which said control resonator and said target resonator are connected via an ancilla resonator coupled to said command circuit for stabilizing a respective ancilla qubit having an ancilla qubit resonance frequency, and wherein said control qubit and said target qubit are not directly connected. Said method comprises the following operations:

a) preparing (400, 700) the ancilla qubit in a state $e^{i\phi 1 Z}|+\rangle$ where $\phi 1$ is a phase comprised in the range $[0; \pi]$ measured around the Z axis of the ancilla qubit,
b) performing a CNOT gate (410, 710) between said control qubit and said ancilla qubit, with the control qubit being the target and the ancilla qubit being the control,
c1) performing a S gate (432, 732) on said target qubit,
c2) performing a CNOT gate (435, 735) between said target qubit and said ancilla qubit, with the target qubit being the target and the ancilla qubit being the control,
c3) performing a conjugate transpose S gate (436, 736) on said target qubit,
c4) performing a S gate (438, 738) on said ancilla qubit,
c5) performing a CNOT gate (439, 739) between said target qubit and said ancilla qubit, with the target qubit being the target and the ancilla qubit being the control,
d) preparing (440, 740) the control qubit in a state $|0\rangle$ or $|1\rangle$,
e) performing a CNOT gate or a zero-controlled NOT gate (450, 750) between said control qubit and said ancilla qubit, with the control qubit being the target and the ancilla qubit being the control,
f) performing an MZ operation (420, 720) on said control qubit,

g) deriving a quantum correction to be performed depending on the result of operation f),

h) performing a measurement in the basis $\{e^{i\phi 1Z}|+\rangle,$ $e^{i\phi 1Z}|-\rangle$ (460, 760) on said ancilla qubit,

i) deriving a corrective quantum Z gate to be performed depending on the result of operation h), wherein operation f) is performed after operation b) but before operation d), and wherein operation h) is performed after operations e) and c5).

This method is advantageous because it allows to perform a CZ gate between two data qubits by using a connecting ancilla qubit, hence reducing the connectivity between the qubits of a given chip. Moreover, the only two-qubit gates required are CNOT gates with the ancilla as the control and either of the two data qubits as targets. This advantageously enables selection of the ancilla qubit which most optimally acts to only perform the function of a control during a CNOT. Furthermore, this method can be tailored to treat some correction step in a software manner, which is also highly advantageous as it reduces the need for applying costly physical gates.

In various embodiments, the method may present one or more of the following features:

- wherein operation a) is the first operation, operation c2) is performed after operation c1), operations c3) and c4) are performed after operation c2), operation c5) is performed after operations c3) and c4), operation f) is performed after operation b), operation d) is performed after operation f), operation e) is performed after operation d), and operation h) is performed after operation e);

- in which operations b) and c2) are performed successively or simultaneously, and in which operation g) further comprises storing (755) a quantum X gate to be applied in post-processing to said control qubit and a quantum Z gate to be applied to said data qubit ;

- in which operation c1) is performed simultaneously with operation a);

- in which operation f) is performed before operation c), and operation g) further comprises applying a quantum X gate (420) to said ancilla qubit if operation f) determines that a corrective quantum X gate is to be applied;

- in which operation i) further comprises storing (760) a quantum Z gate to be applied in post-processing to said control qubit;

- in which operation i) further comprises applying a quantum Z gate (460) to said control qubit if operation f) determines that a corrective quantum X gate is to be applied;

- in which operation c3) and operation c4) are simultaneous;

- in which operation c5) and operation e) are simultaneous;

- in which operation a) comprises preparing the ancilla qubit in a state $|+\rangle$ or $|-\rangle$, and wherein operation h) comprises performing an MX operation on said ancilla qubit;

- in which operation d) comprises preparing the control qubit in a state $|0\rangle$ or $|-\rangle$, and wherein operation e) comprises performing CNOT gate between said control qubit and said ancilla qubit;

- in which said ancilla qubit is a cat qubit

The invention also concerns a quantum system comprising: a superconducting quantum circuit comprising a control resonator, a target resonator, and an ancilla resonator, wherein said control resonator and said target resonator are connected via the ancilla resonator; and a command circuit for selectively applying radiation to said superconducting quantum circuit to stabilize a control qubit, a target data qubit, and an ancilla qubit, wherein the control and target qubits are connected to the ancilla qubit and wherein said control qubit and said target qubit are not directly connected. The command circuit is further configured to perform the method of any of the preceding embodiments.

The invention also concerns a computer program product comprising instructions which cause the quantum system to carry out the operations of the method of any of the preceding embodiments.

The invention also concerns a computer-readable medium having stored thereon the computer program product.

Other features and advantages of the invention will readily appear in the following description of the drawings, which show exemplary embodiments of the invention and on which:

- Figure 1 shows a first embodiment of a quantum circuit which can be used to perform the method according to the invention,
- Figure 2 shows a first example of a method according to the invention,
- Figure 3 shows a another example of a method according to the invention,
- Figure 4 shows a diagram of operations performed in the examples of figures 2 and 3,
- Figure 5 a another example of a method according to the invention,
- Figure 6 shows another example of a method according to the invention, and
- Figure 7 shows a diagram of operations performed in the examples of figures 5 and 6.

The drawings and the following description are comprised for the most part of positive and well-defined features. As a result, they are not only useful in understanding the invention, but they can also be used to contribute to its definition, should the need arise.

## C. Cat qubits

So far, the Applicant's work has been generally concerned with the stabilization of cat qubits. As previously explained, R. Lescanne et al. (2020) demonstrated that such cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with:

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of superconducting quantum circuits have observed this exponential suppression of bit-flip errors with the average number of photons in the cat states.

It is generally considered that the use of a single repetition code is sufficient to correct the remaining errors as bit-flip errors are sufficiently rare; and, more particularly, a phase-flip error correction code is sufficient to correct the remaining phase-flip. This can be for instance a repetition code defined in the dual base or any other state-of-the-art error correction code.

## D. Stabilization schemes

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction, an ATS or a DC bias coupled to Josephson junctions - to the cat qubit mode a and by engineering the Hamiltonian $H/\hbar = g_2(a^2 \text{-} a^2)b^\dagger +$ h. c., where b is the photon annihilation operator of the buffer mode b and $g_2$ is the two-photon coupling rate, by applying to the four-wave mixing device a pump at frequency $|2f_a \text{-} f_b|$ and a drive of the buffer mode at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where $K$ is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$, where $K$ is the amplitude of the Kerr Hamiltonian, $a$ is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + $ h. c. , where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left((\cosh(r)a + \sinh(r)e^{i\theta}a^\dagger)^2 - \alpha^2\right)$, where $\kappa_{sc}$ is the squeezed two-photon dissipation rate, $a$ is the photon annihilation operator, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian $H/\hbar = g_{SC}((\cosh(r)a + \sinh(r)e^{i\theta}a^\dagger)^2 - a^2)b^\dagger + $ h. c., where b is the photon annihilation operator of mode b and $g_{sc}$ is the squeezed two-photon coupling rate, with several pumps at frequencies $|2f_a \text{-} f_b|$, $f_b$ and $2f_a + f_b$, and a drive of the buffer mode b at frequency $f_b$ provided $g_{SC} < \kappa_b$.

f) a variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian

$$H/_\hbar = g_2(a^2 + \lambda a^\dagger a - \alpha^2)b^\dagger + \text{h.c.} \; ,$$

where $g_2$ is the amplitude of a pump at frequency | $2f_a$ - $f_b$|, $a$ is the annihilation operator of the cat qubit mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and b is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

g) a resonant dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/_\hbar = = g_2(a^2 - \alpha^2)b^\dagger + \text{h.c.}$, where b is the photon annihilation operator of the buffer mode b provided the mode frequencies verify substantially $2f_a = f_b$ and $g_2 < \kappa_b$ to which a drive of the buffer mode at frequency $f_b$ is added.

The present invention may implement any of these stabilization schemes to generate the data cat qubits and the ancilla qubits used in the quantum system described below. In the below description, the physical implementation of the cat qubits, that is the resonator driven in a specific manner to stabilize a cat qubit will be identified to the cat qubit it hosts. Hence, the expression "cat qubit" and "cat" will designate both the physical entity hosting the cat qubit and the cat qubit itself. Similarly, the word ancilla will designate an ancilla cat qubit and the physical entity hosting it, and the word data will designate a data cat qubit and the physical entity hosting it. The notion of ancilla and data relate to their roles in an FTQC, whereby the ancilla is used to measure errors on the data and help correct it. In some embodiments relating to the implementation of quantum gates, the words control and target will designate both the qubit having the corresponding role (control or target) in the quantum gate as well as the physical entity hosting it. Here again, "target" will designate a "target qubit" or a "target cat qubit" and "control" will designate a "control qubit" or "control cat qubit".

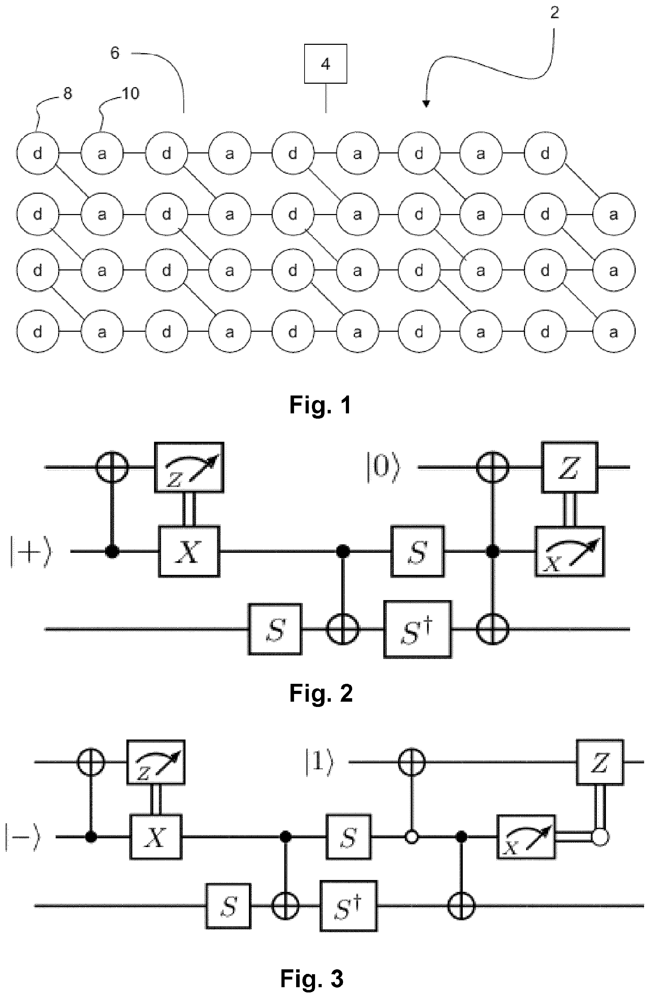

Figure 1 shows a first embodiment of a quantum circuit for performing the method according to the invention.

As appears on this figure, a quantum system 2 comprises a command circuit 4 which is arranged to apply radiation to resonators of a superconducting quantum circuit 6 in order to stabilize a respective cat qubit in each respective resonator. The superconducting quantum circuit comprises two types of resonators: data resonators 8 (labeled "d") and ancilla resonators 10 (labeled "a"). As a result, the data resonators 8 host data cat qubits, and the ancilla resonators 10 host ancilla qubits, and preferably ancilla cat qubits. That is, in some embodiments, the ancilla qubits need not be cat qubits, and may be other conventional qubits such as transmon or fluxonium.

In the example shown here, the resonators are substantially aligned in a grid like geometry in lines and rows. In various embodiments, the resonators in any given line or any given row maybe slightly offset with respect to the others within the same line or row. Furthermore, other geometries could be used for arranging the resonators. What matters most is that the various lines of resonators do not intersect or overlap. On figure 1, two lines 12 are shown, and they are substantially parallel between them. Here again, the lines maybe imperfectly parallel, as long as they do not intersect or overlap.

The reason for that is that, within a given line, there is a strict alternance of data cat qubits and ancilla cat qubits, and each cat is connected to its two immediate neighbors within the bus line. This pattern is a first essential element which provides the robustness / flexibility compromise of the invention. The second essential element is that the lines are interconnected, with each ancilla being connected to a data of the bus line above. It will appear readily here that "above" is a relative term depending on the arrangement of the superconducting quantum circuit 6. In the example shown here, each ancilla is connected to the data in the bus line immediately above, and immediately to the left of the ancilla. As an alternative, the ancilla could be connected to the data immediately to the right, or in the bus line immediately below.

In some embodiments, one may imagine connecting lines not immediately neighboring one another, or connecting an ancilla and a data which are further than immediately to the left or to the right in the bus line above or below. However, this means that the routing of the connections will be complex to manufacture, and one should also keep in mind that longer connections are more prone to errors.

As a result, one can see that the topography of the superconducting quantum circuit 6 of figure 1 allows for both robustness and flexibility. Indeed, on the one end, a very long repetition code, or a classical LDPC code as described by the Applicant in EP23307437.6.

While the example shown on figure 1 represents a grid having 4 lines and 10 rows, it will appear readily that there could be more lines or more rows but also less (although that would be less interesting, particularly below 7 total resonators). Incidentally, figure 1 shows that the top most bus line has one less ancilla than the other lines. This is normal and due to the topography described above. In some implementations, there can be a resonator in the place of the empty space of the top bus line. It only matters that this resonator not host a cat qubit or any qubit at all and that it remains isolated from the rest of the superconducting quantum circuit 6. It is noted that the example shown in figure 1 is just one example of a physical quantum circuit suitable for applying the inventive method described herein. Many different arrangements of data resonators 8 and ancilla resonators 10 may be provided, what is important is that the two data cat qubits hosted in respective data resonators 8 between which a CZ gate is to be applied are coupled together only via an intervening ancilla resonator 10. That is, a generalization of the example developed in depth above can thus easily be realized. What is important is the provision of physical resonators in which to host qubits (in general any physical oscillatory mode suitable for hosting a qubit according to the type of architecture), qubit couplers for enabling coupling or connection therebetween so as to perform at least two-qubit entangling quantum gates, and a command circuit for sending control signals to the physical resonators and/or qubit couplers to achieve said qubit preparation and manipulation, as well as readout.

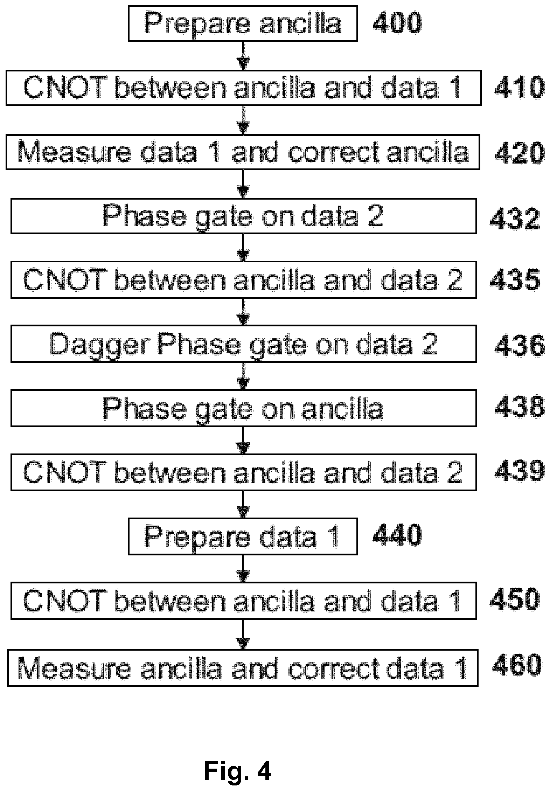

Figures 2 and 3 show two embodiments of the invention. Figures 2 and 3 adopt the formalism of "quantum circuit diagrams" for representing quantum gates operations wherein each line represents the operations performed on a given qubit, and will readily be understood by the man skilled in the art. Figure 4 provides a general description of these two variants. For the avoidance of doubt, herein "quantum circuit diagram" refers to the graphical depiction a sequence of, e.g., quantum gates, measurements and initializations of qubits (generally referred to herein as a "quantum circuit sequence") wherein the horizontal axis denotes time starting at the left-hand side and ending at the right-hand side. These should not be confused with "superconducting quantum circuit" or other "quantum circuit' which refers to the physical architecture in which qubits are hosted and manipulated, such as that described in figure 1, the distinction of which is clear in context.

On figures 2 and 3, there are three lines. Each lines represents the operations performed on a given qubit. In the examples shown here, the result of this sequence of operations is a CZ gate between a data qubit 1 and a data qubit 2, with the data qubit 1 being the control and the data qubit 2 being the target.

The operations performed on the data qubit 1 are shown on the top-most line of figures 2 and 3, whereas the operations performed on the data qubit 2 are shown on the lower-most line of figures 2 and 3. In between these two lines are shown the operations performed on an ancilla qubit. The data qubit 1, the ancilla qubit and the data qubit 2 need to be physically connected in order for this CZ gate to be carried out. In the context of figure 1 for instance, it can be any triplet of two data qubits connected to the same ancilla qubit.

Figure 4 details the series of operations of figures 2 and 3.

In a first operation 400, the command circuit 4 prepares the ancilla qubit in a reference state. In the example of figure 2, this reference state is $|+\rangle$, whereas in the example of figure 3, this reference is $|-\rangle$. More generally speaking, the ancilla can be prepared in a state $e^{i\phi 1 Z}|+\rangle$ where $\phi 1$ is a phase comprised in the range $[0;\pi]$ and $Z$ denotes the rotation is about the Z axis of the Bloch sphere of the cat qubit. As will be appreciated, when needing to measure the ancilla qubit, rather than measuring in X as would be the case if prepared in $|+\rangle$ or $|-\rangle$, here then a subsequent measurement of the ancilla qubit must be in the basis $\{e^{i\phi 1 Z}|+\rangle, e^{i\phi 1 Z}|-\rangle\}$(i.e. in operations 460 or 760 as described below).

This preparation is a critical, as it sets the initial conditions for the ancilla qubit, which must remain be fixed and maintained to determine be able to interpret the result of the CNOT gate between data qubit 1 and data qubit 2.

This reference state can be represented as a point in the complex Hilbert space and it serves as a reference point for the quantum operations that follow. The initialization process may involve cooling the qubit to its ground state to reduce thermal noise and applying a series of microwave pulses or other radiation controlled by the command circuit 4. These pulses are calibrated to manipulate the quantum state of the ancilla qubit without inducing decoherence or unwanted transitions in energy levels. Alternatively, in the context of an ancilla cat qubit, the reference state of the ancilla can be prepared via growing a cat qubit from the vacuum state of the ancilla resonator 10, or an appropriate operation (i.e. quantum gate) to bring the state of the ancilla cat qubit resulting from a previous sequence of operations to the desired reference state. What is important is that the ancilla cat qubit is prepared in the reference state.

The state $|+\rangle$ is chosen for its stability and ease of preparation, but depending on the specific quantum algorithm or operation, the ancilla qubit could also be prepared in a superposition state or an entangled state with other qubits if required. The preparation step may also include error-checking protocols to ensure the ancilla qubit is in the correct state before proceeding to the next steps. This could involve a series of quantum error correction techniques, such as syndrome extraction and application of corrective operations, to mitigate any errors that may have occurred during the preparation phase.

Once the ancilla qubit is prepared, its quantum state is then used as a control in the subsequent CNOT operations, effectively entangling the state of the ancilla qubit with the states of data qubit 1 and data qubit 2 (and subsequent disentangling therefrom via measurement-based uncomputation). The precise preparation of the ancilla qubit is thus an important operation for the fidelity and success of the quantum gate operations that follow in the method.

Following operation 400, the method progresses to the execution of a CNOT gate between the ancilla qubit and the first data qubit, designated as data qubit 1. The CNOT gate is a fundamental two-qubit operation in quantum computing that applies an X gate on the target qubit conditioned on the state of the control in the Z basis.. As shown on figures 2 and 3, in the examples shown here, the ancilla qubit is the control, and the data qubit 1 is the target.

The CNOT gate is implemented by applying a sequence of precisely timed microwave pulses or other forms of radiation that are controlled by the command circuit 4. These pulses are designed to interact with the qubits in such a way that the state of data qubit 1 is flipped conditional on the state of the ancilla qubit.

The success of this operation depends on the accurate timing and phase coherence of the pulses, as well as the isolation of the qubits from external noise sources that could cause decoherence. The command circuit 4 must also account for the specific resonance frequencies of the ancilla and data qubits to ensure that the pulses selectively interact with the intended qubits without affecting others in the superconducting quantum circuit 6.

Furthermore, depending on the type of ancilla qubit used, the CNOT operation may involve dynamic tuning of the qubit frequencies or of a tunable coupler to bring them into resonance for the interaction and then detuning them afterward to protect against unwanted interactions. This step may also include real-time feedback mechanisms to adjust the pulses based on the state of the qubits, ensuring high-fidelity gate operations.

In the specific example of a physical CNOT gate between a target cat qubit realised by stabilization scheme (a) above and a control qubit (preferably another cat qubit as the control qubit), the command circuit 4 may induce the CNOT gate by sending a control signal in the form of an electromagnetic parametric pump having the frequency of the control qubit (namely the appropriate resonant frequency of the resonator in which the control qubit is hosted) to the four-wave mixing device of the target, for instance as described in EP23305298.4 filed by the Applicant on 06/03/2023. Alternatively, the command circuit 4 may be configured to induce a physical CNOT gate via applying a "cross-Kerr" interaction as described in Putterman, Harald, et al. "Hardware-efficient quantum error correction using concatenated bosonic qubits." arXiv preprint arXiv:2409.13025 (2024), or a dissipative conditional rotation via appropriate parametric pumps at different frequencies as described in Guillaud, Jérémie, and Mazyar Mirrahimi. "Repetition cat qubits for fault-tolerant quantum computation." Physical Review X9.4 (2019): 041053. What is important here is that the ancilla qubit is configured so as to only be a control under the radiation which the command circuit 4 is configured to apply to the superconducting quantum circuit 6.

After the CNOT gate of operation 410 has been performed, an operation 420 of conditional correction is performed. More precisely, a correction is executed on the ancilla qubit depending on the result of the value of the Z operator of data qubit 1. In order to do so, data qubit 1 is measured in the Z basis in operation 420, and, if this measurement returns the value -1, the ancilla qubit undergoes correction by applying a Pauli-X gate, as shown on figures 2 and 3. In order to denote the conditionality of this correction, there is a double bar linking the MZ operation and the X correction. For the following, a double bar linking two operations will mean that the second operation is conditional on the result of the first one.

Thereafter, a phase gate, also called S gate is performed on the data qubit 2 in an operation 430. The quantum S gate is a single-qubit quantum gate that introduces a phase shift of $\pi/2$ (90 degrees) to the qubit's state around the Z axis in the qubit's Bloch sphere representation and is defined by the single-qubit unitary matrix $S = \begin{bmatrix} 1 & 0 \\ 0 & i \end{bmatrix}$.

As will be known to the skilled person, a number of different mechanisms can be used to induce the required rotation about the Z axis such that a data cat qubit undergoes an S gate (or its conjugate transpose). For instance, a so-called Zeno drive can be applied whilst the stabilization of the cat qubit is maintained on, for instance via application of an electromagnetic drive to the data resonator 8 (in which the data qubit is hosted) which is at the relevant resonant frequency of the data resonator 8 with the phase of the drive appropriately tuned so as to only induce a rolling of the cat qubit fringes as described for instance in Réglade, Ulysse, et al. "Quantum control of a cat qubit with bit-flip times exceeding ten seconds." Nature (2024): 1-6.. Alternatively, other higher-order Hamiltonian terms can appropriately be engineered as described in Gautier, Ronan, Mazyar Mirrahimi, and Alain Sarlette. "Designing high-fidelity Zeno gates for dissipative cat qubits." PRX Quantum 4.4 (2023): 040316.

Yet another alternative could use an ancillary transmon qubit (which is either the ancilla qubit used in the method herein, or is another additional qubit) and the appropriate sequence of operations as described in Hann, Connor T., et al. "Hybrid cat-transmon architecture for scalable, hardware-efficient quantum error correction." arXiv preprint arXiv:2410.23363 (2024). In all of these example implementations, the duration of the interaction is chosen to rotate only $\pi/2$ rather than the full $\pi$ required for the Z-gate described therein. Crucially, the S gate can be applied to a data cat qubit in such a manner as to maintain the aforementioned noise bias which the cat qubit benefits from (notably that an exponential suppression of bit-flip errors with increasing average photon number of the cat qubit is maintained under the application of the gate).

Then, a series of operations are performed on the data qubit 2 and the ancilla qubit. This series starts with a CNOT gate which is performed in an operation 435. This time, this CNOT gate is performed between the ancilla qubit and the data qubit 2, with the ancilla qubit being the control, and the data qubit 1 being the target. This operation is very similar to operation 410.

After the CNOT gate of operation 435, a conjugate transpose of the S gate, or dagger S gate, is performed on the data qubit 2 in an operation 436, and a phase gate is performed on the ancilla qubit in an operation 438. Operations 436 and 438 can be performed simultaneously, or with a delay therebetween. Thereafter, a CNOT gate is performed in an operation 439 between the ancilla qubit and the data qubit 2, with the ancilla being the control, and the data qubit 2 being the target. Operation 439 may be identical to operation 435, but performed after operations 436 and 438.

The combination of operations 432, 435, 436, 438 and 439 allows to perform the equivalent of a controlled Z gate with the ancilla qubit as the target and the data qubit 2 as the control, but with operations in which the data qubit 2 is only the target, and never the control.

At the same time as operation 439, or shortly before or after it, the data qubit 1 is prepared in a specific state in an operation 440, in order to receive the result of the CNOT gate of figures 2 to 4. This preparation is fairly similar to the preparation of the ancilla qubit of operation 400, except that the preparation state is of the data qubit 1. Figures 2 and 3 show two variants where a state $|0\rangle$ is prepared in the example of figure 2, and in a state $|1\rangle$ in the example of figure 3.

After the data qubit 1 is prepared in its reference state, a CNOT-like operation is again carried out in an operation 450. As shown on figures 2 and 3, this operation is very similar to operation 410, and the ancilla qubit is the control, whereas the data qubit 2 is the target. However, there is a difference, in that the CNOT-like operation in figure 2 is a conventional CNOT, whereas in figure 3, as the data qubit 1 was prepared in $|1\rangle$ and according to commutation relations, a zero-controlled NOT gate is what is needed to be performed with the ancilla qubit as control and the data qubit 1 as the target.

Physically, a zero-controlled NOT gate can be applied between two cat qubits following a similar method as the conventional CNOT between two cat qubits.

Specifically, as will be known to the skilled person, a number of different mechanisms can be used to induce a CNOT gate between an ancilla qubit as control and a data cat qubit as target, as described in above. To apply then a zero-controlled NOT gate between two cat qubits, we apply the same protocols as those for the conventional gate described above, but with $\alpha$ and $-\alpha$ (the complex amplitudes of the coherent states which, superposed, provide the cat qubit states of the control qubit) are exchanged. Physically, this can be achieved by performing the relevant pumps and drives out of phase to those of the corresponding conventional CNOT. For instance, in embodiments such as described in EP23305298.4 filed by the Applicant on 06/03/2023, to induce a zero-controlled NOT gate between a data cat qubit (target) and a control qubit (preferably another cat qubit), the pump on the ATS of the target cat qubit at the frequency of the control cat qubit will be $\pi$ out of phase compared to the conventional CNOT formulation.

The inventor has discovered it to be preferable to do the former, namely prepare the data qubit 1 in a $|0\rangle$ state and subsequently perform the conventional CNOT in operation 450. In this case, if operation 440 is carried out enough in advance with respect to operation 439, operation 439 and operation 450 can be carried out simultaneously, as the Applicant has shown possible in application EP23305297.

Finally, in an operation 460, a conditional correction is performed on the data qubit 1. This operation is similar to operation 420, except that here, it is the X operator of the ancilla qubit which is measured, if the ancilla qubit were originally prepared in $|+\rangle$ or $|-\rangle$. As will be appreciated, if the ancilla qubit is originally prepared in a state $e^{i\phi_1 Z}|+\rangle$ where $\Phi_1$ is a phase comprised in the range $[0;\pi]$ and Z denotes that this angle is measured around the Z axis of the Bloch sphere, then the measurement in 460 must be in the basis $\{e^{i\phi_1 Z}|+\rangle, e^{i\phi_1 Z}|+\rangle\}$ (460, 760) on said ancilla qubit.

In the example of figure 2 and, if the measurement in the X basis of the ancilla qubit returns the value -1, the data qubit 1 undergoes a correction by applying a Pauli Z-gate (also known as a phase-flip gate). In the example of figure 3, given the different preparations, if the measurement in the X basis of the ancilla qubit returns the value +1, the data qubit 1 undergoes a correction by applying a Pauli Z-gate - this is denoted by the white circle in the conditional double lines in figure 3.

After all these operations, a CZ gate has been performed between the data qubit 1 (as a control) and the data qubit 2 (as a target).

While this method may appear more complicated than merely applying a transverse CZ operation between the data qubit 1 and the data qubit 2, it should be noted that this method allows to perform the CZ operation without there being a direct physical connection between these two qubits. This is very advantageous as described above, and allows to increase the fidelity of this CZ gate despite the added operations. Moreover, this method uses relatively simple S gates and only CNOT gates with the ancilla qubit always as the control, which are convenient gates. In particular, the CNOT gate with the ancilla qubit as control is an inherent requirement during syndrome extraction of a stabilizer of an error-correction code. Thus the very same CNOT gate, once calibrated, can be used for both error-correction purposes and the specific method described herein to perform transverse CZ operations between data qubits (which may be used on top of the error-correction sequences so as to perform parts of quantum algorithms, such as in lattice surgery schemes).

The Applicant continued his research, and discovered that the invention can be further improved by providing correction stacking, thus reducing the number of quantum gates to be performed.

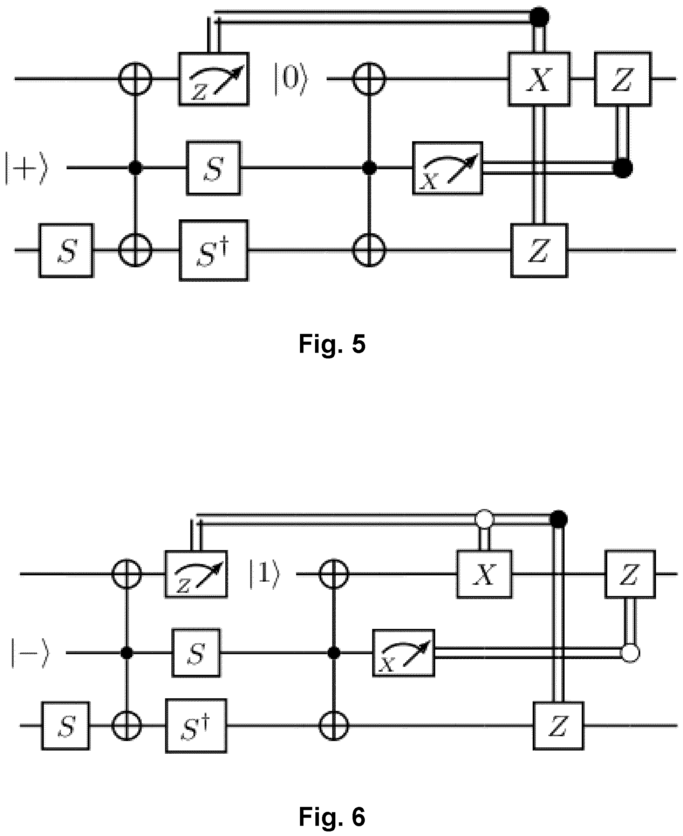

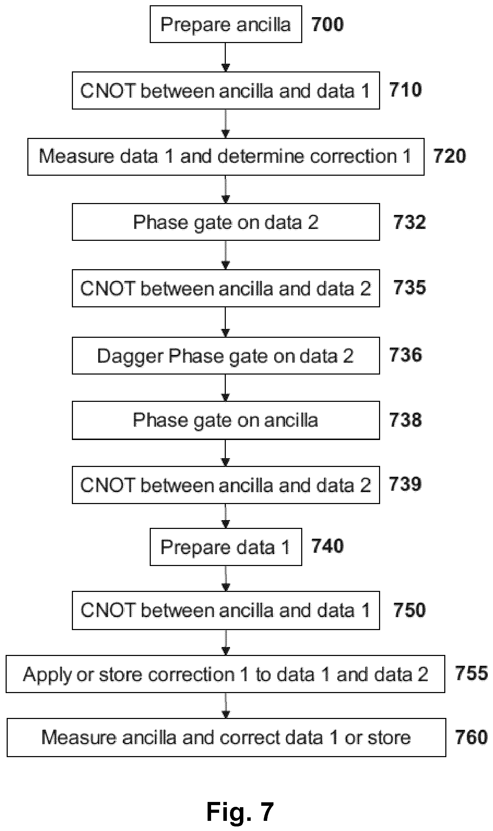

This method is shown with the embodiments of figures 5 to 7. In figure 7, the operations which are similar to those of figure 4 have been given the same last two digits. For example, operation 400 and operation 700 are identical. For this reason, only the differences between these two series of operations will be described below.

A first difference lies in the moment for performing operations 720 and 735. While the example of figure 4 required operation 435 to be performed after operation 420, it is not the case anymore. Indeed, operation 720 is slightly different from operation 420 in that the conditional correction is not performed on the ancilla, but on both the data qubit 1 and the data qubit 2, with the correction on data qubit 1 being a Pauli-X gate, and the correction on data qubit 2 being a Pauli-Z gate. Specifically, in figure 5, both X and Z gate corrections are to be performed if the MZ yields a -1 result. In figure 6, the X gate correction on data qubit 1 is to be performed if the MZ yields a +1 result whereas the Z gate correction on data qubit 2 is to be performed if the MZ yields a -1 result.

Furthermore, while the measurement has to be performed after operation 710 and before operation 740, the correction can be performed in an operation 755 at a later stage, after operation 750, and in a preferred manner, the correction is not physically carried out. Instead, a list of corrections to be performed on respectively the data qubit 1 and the data qubit 2 is maintained, and this list of operations is performed in a software manner when the final state of the data qubit 1 and the data qubit 2 are determined.

Said otherwise, the correction operations (e.g. so-called "Pauli corrections") need not (and indeed typically are not) physically applied, but rather they are used to update a Pauli frame. Said otherwise, these corrections can be tracked throughout a quantum circuit sequence. Multiple ones of these corrections can be tracked, collected, compiled together satisfying the relevant commutation relations, and subsequently physically applied in one go or simply applied in software (e.g. by taking the physical output of a quantum sequence, recognising how said corrections would modify the output, and thus digitally setting the result of the quantum sequence accordingly). As such, in the above specific example, if the correction operation is not applied immediately to the relevant qubit and instead delayed, further operations on that qubit may result in the correction being tracked and applied to one or more qubits other than that qubit.

This allows to perform operations 710 and 735 very close to one another, or even simultaneously, as the Applicant has shown possible in application EP23305297. This allows to gain a lot of time and hence improves fidelity. Of course, this means that operation 732 has to be anticipated, and it can be performed simultaneously or close to operation 700.

Another difference lies in operation 760, which may also be carried out in a software manner in a preferred embodiment.

When comparing the embodiments of figures 2-4 and the embodiments of figures 5-7, it thus appears that the embodiments of figures 5-7 can be carried out much faster, since operations 710 and 735 can be carried out simultaneously, and since the conditional correction operations can be skipped altogether by storing their value.

**Claims**

1. Method of performing a controlled-Z gate between a control qubit having a control qubit resonance frequency and a target qubit having a target qubit resonance frequency,

   in which said control qubit and said target qubit are cat qubits hosted respectively in a control resonator and in a target resonator of a superconducting quantum circuit, and are stabilized therein by means of a command circuit arranged for selectively applying radiation to said superconducting quantum circuit, and
   in which said control resonator and said target resonator are connected via an ancilla resonator coupled to said command circuit for stabilizing a respective ancilla qubit having an ancilla qubit resonance frequency, and wherein said control qubit and said target qubit are not directly connected,
   said method comprising the following operations:

   a) preparing (400, 700) the ancilla qubit in a state $e^{i\phi 1Z}|+\rangle$ where $\phi 1$ is a phase comprised in the range $[0; \pi]$ measured around the Z axis of the ancilla qubit,
   b) performing a CNOT gate (410, 710) between said control qubit and said ancilla qubit, with the control qubit being the target and the ancilla qubit being the control,
   c1) performing a S gate (432, 732) on said target qubit,
   c2) performing a CNOT gate (435, 735) between said target qubit and said ancilla qubit, with the target qubit being the target and the ancilla qubit being the control,
   c3) performing a conjugate transpose S gate (436, 736) on said target qubit,
   c4) performing a S gate (438, 738) on said ancilla qubit,
   c5) performing a CNOT gate (439, 739) between said target qubit and said ancilla qubit, with the target qubit being the target and the ancilla qubit being the control,
d) preparing (440, 740) the control qubit in a state $|0\rangle$ or $|1\rangle$,
e) performing a CNOT gate or a zero-controlled NOT gate (450, 750) between said control qubit and said ancilla qubit, with the control qubit being the target and the ancilla qubit being the control,
f) performing an MZ operation (420, 720) on said control qubit,
g) deriving a quantum correction to be performed depending on the result of operation f),
h) performing a measurement in the basis $\{e^{i\phi^1 Z}|+\rangle, e^{i\phi^1 Z}|+\rangle\}$ (460, 760) on said ancilla qubit,
i) deriving a corrective quantum Z gate to be performed depending on the result of operation h),

wherein operation f) is performed after operation b) but before operation d), and wherein operation h) is performed after operations e) and c5).

2. Method according to claim 1, wherein operation a) is the first operation, operation c2) is performed after operation c1), operations c3) and c4) are performed after operation c2), operation c5) is performed after operations c3) and c4), operation f) is performed after operation b), operation d) is performed after operation f), operation e) is performed after operation d), and operation h) is performed after operation e).

3. Method according to claims 1 or 2, in which operations b) and c2) are performed successively or simultaneously, and in which operation g) further comprises storing (755) a quantum X gate to be applied in post-processing to said control qubit and a quantum Z gate to be applied to said data qubit.

4. Method according to claim 3, in which operation c1) is performed simultaneously with operation a).

5. Method according to claim 1, in which operation f) is performed before operation c), and operation g) further comprises applying a quantum X gate (420) to said ancilla qubit if operation f) determines that a corrective quantum X gate is to be applied.

6. Method according to one of claims 1 to 5, in which operation i) further comprises storing (760) a quantum Z gate to be applied in post-processing to said control qubit.

7. Method according to one of claims 1 to 5, in which operation i) further comprises applying a quantum Z gate (460) to said control qubit if operation f) determines that a corrective quantum X gate is to be applied.

8. Method according to one of the preceding claims, in which operation c3) and operation c4) are simultaneous.

9. Method according to one of the preceding claims, in which operation c5) and operation e) are simultaneous.

10. Method according to one of the preceding claims, in which operation a) comprises preparing the ancilla qubit in a state $|+\rangle$ or $|-\rangle$, and wherein operation h) comprises performing an MX operation on said ancilla qubit.

11. Method according to one of the preceding claims, in which operation d) comprises preparing the control qubit in a state $|0\rangle$ or $|-\rangle$, and wherein operation e) comprises performing CNOT gate between said control qubit and said ancilla qubit.

12. Method according to one of the preceding claims, in which said ancilla qubit is a cat qubit.

13. A quantum system comprising:

a superconducting quantum circuit comprising a control resonator, a target resonator, and an ancilla resonator, wherein said control resonator and said target resonator are connected via the ancilla resonator; and
a command circuit for selectively applying radiation to said superconducting quantum circuit to stabilize a control qubit, a target data qubit, and an ancilla qubit, wherein the control and target qubits are connected to the ancilla qubit and wherein said control qubit and said target qubit are not directly connected;
wherein the command circuit is further configured to perform the method of any of the preceding claims.

14. A computer program product comprising instructions which cause the quantum system of claim 13 to carry out the operations of the method of any one of claims 1 to 12.

15. A computer-readable medium having stored thereon the computer program product of claim 14.

Fig. 1

Fig. 2

Fig. 3

| Prepare ancilla | 400 |

↓

| CNOT between ancilla and data 1 | 410 |

↓

| Measure data 1 and correct ancilla | 420 |

↓

| Phase gate on data 2 | 432 |

↓

| CNOT between ancilla and data 2 | 435 |

↓

| Dagger Phase gate on data 2 | 436 |

↓

| Phase gate on ancilla | 438 |

↓

| CNOT between ancilla and data 2 | 439 |

↓

| Prepare data 1 | 440 |

↓

| CNOT between ancilla and data 1 | 450 |

↓

| Measure ancilla and correct data 1 | 460 |

**Fig. 4**

**Fig. 5**

**Fig. 6**

| Prepare ancilla | 700 |

↓

| CNOT between ancilla and data 1 | 710 |

↓

| Measure data 1 and determine correction 1 | 720 |

↓

| Phase gate on data 2 | 732 |

↓

| CNOT between ancilla and data 2 | 735 |

↓

| Dagger Phase gate on data 2 | 736 |

↓

| Phase gate on ancilla | 738 |

↓

| CNOT between ancilla and data 2 | 739 |

↓

| Prepare data 1 | 740 |

↓

| CNOT between ancilla and data 1 | 750 |

↓

| Apply or store correction 1 to data 1 and data 2 | 755 |

↓

| Measure ancilla and correct data 1 or store | 760 |

## Fig. 7

Europäisches
Patentamt

European
Patent Office

Office européen
des brevets

## EUROPEAN SEARCH REPORT

**Application Number**

EP 24 30 7323

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PANOS ALIFERIS ET AL: "Computation by measurements: a unifying picture", ARXIV.ORG, CORNELL UNIVERSITY LIBRARY, 201 OLIN LIBRARY CORNELL UNIVERSITY ITHACA, NY 14853, 13 April 2004 (2004-04-13), XP080151047, DOI: 10.1103/PHYSREVA.70.062314 * page 8 - page 12; figure 16 * | 1-15 | INV. G06N10/20 G06N10/40 G06N10/70 |
| A | EP 4 428 765 A1 (ALICE & BOB [FR]; INRIA INST NAT RECH INFORMATIQUE & AUTOMATIQUE [FR]) 11 September 2024 (2024-09-11) * page 1 - page 13; figures 4, 8, 10 * | 1-15 | |
| A | ZHOU X ET AL: "Methodology for quantum logic gate constructions", PHYSICAL REVIEW, A. GENERAL PHYSICS, AMERICAN INSTITUTE OF PHYSICS. NEW YORK, US, vol. 62, 1 November 2000 (2000-11-01), pages 1-17, XP002982092, ISSN: 0556-2791 * Sections I-VI; Appendices A-C; figure Equation (36) * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 19 June 2025 | Klasen, TJ |

## ANNEX TO THE EUROPEAN SEARCH REPORT
## ON EUROPEAN PATENT APPLICATION NO.

EP 24 30 7323

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2025

| Patent document cited in search report | Publication date | Patent family member(s) | Publication date |
|---|---|---|---|
| EP 4428765 A1 | 11-09-2024 | EP 4428765 A1 | 11-09-2024 |
| | | WO 2024184405 A1 | 12-09-2024 |

## REFERENCES CITED IN THE DESCRIPTION

**Patent documents cited in the description**

- EP 23175147
- EP 23307437
- EP 23305298
- EP 23305297 A

**Non-patent literature cited in the description**

- **HANN, CONNOR T. et al.** Hybrid cat-transmon architecture for scalable, hardware-efficient quantum error correction. *arXiv:2410.23363*, 2024
- **PUTTERMAN, HARALD et al.** Hardware-efficient quantum error correction using concatenated bosonic qubits. *arXiv:2409.13025*, 2024
- **GUILLAUD, JÉRÉMIE ; MAZYAR MIRRAHIMI**. Repetition cat qubits for fault-tolerant quantum computation. *Physical Review*, 2019, vol. X9 (4), 041053
- **RÉGLADE, ULYSSE et al.** Quantum control of a cat qubit with bit-flip times exceeding ten seconds. *Nature*, 2024, 1-6
- **GAUTIER, RONAN ; MAZYAR MIRRAHIMI ; ALAIN SARLETTE**. Designing high-fidelity Zeno gates for dissipative cat qubits. *PRX Quantum*, 2023, vol. 4 (4), 040316